# EUROPÄISCHE PATENTSCHRIFT

(11) **EP 1 646 798 B1**
(45) Veröffentlichungstag und Bekanntmachung des Hinweises auf die Patenterteilung: **24.12.2008**
(21) Anmeldenummer: 04740951.1
(22) Anmeldetag: 13.07.2004
(51) Int. Cl.: F16D 13/75

(54) **KUPPLUNGSSTELLER**
CLUTCH ACTUATOR
ACTIONNEUR D'EMBRAYAGE

(30) Priorität: 15.07.2003 DE 10331927
(43) Veröffentlichungstag der Anmeldung: 19.04.2006
(73) Patentinhaber: KNORR-BREMSE SYSTEME FÜR NUTZFAHRZEUGE GMBH, 80809 München (DE)
(72) Erfinder: MILLER, Bernhard, 71263 Weil der Stadt (DE)
(74) Vertreter: Schönmann, Kurt
(86) Internationale Anmeldenummer: PCT/EP2004/007706
(87) Internationale Veröffentlichungsnummer: WO 2005/008094

(56) Entgegenhaltungen:
- EP-A- 1 150 031
- DE-A- 4 443 649
- DE-A- 10 014 225

## Beschreibung

### Stand der Technik

Die Erfindung geht aus von einem Kupplungssteller zur Betätigung einer Kupplung zwischen einem Antriebsmotor und einem Getriebe eines Kraftfahrzeugs, insbesondere eines Nutzfahrzeugs, beinhaltend einen linear betätigbaren Stößel, der auf einen mit einer Mittelachse der Kupplung koaxialen Ausrücker wirkt, gemäß dem Oberbegriff von Anspruch 1.

Ein solcher Kupplungssteller ist beispielsweise aus der DE 100 14 225 A1 bekannt. Ein solcher Kupplungssteller ist meist außen am Getriebegehäuse angeflanscht und weist einen linear betätigten Stößel auf, welcher parallel zur Mittelachse der Kupplung angeordnet und mit einem Ende eines innerhalb des Kupplungsgehäuses schwenkbar gelagerten Ausrückhebel gekoppelt ist, dessen anderes Ende einen Ausrücker, beispielsweise ein zur Kupplungsmittelachse koaxiales Ausrücklager betätigt. Der Ausrückhebel wird mit großen Kräften und Biegemomenten belastet, weshalb er groß dimensioniert ist und meist als Schmiedeteil ausgeführt ist, was wiederum relativ hohe Fertigungskosten bedingt. Außerdem bietet der Ausrückhebel eine nur geringe Kraftübersetzung, so dass der Kupplungssteller entsprechend groß dimensioniert werden muss.

Die DE 44 43 649 A1 offenbart eine elektromotorische Betätigung einer Reibscheibenkupplung, die durch eine Kupplungsfeder ständig im Einrücksinne betätigt ist und durch einen auf die Kupplungsfeder wirkenden Druckring ausgerückt wird. Der Druckring stützt sich an einem Gehäuse eines Ausrücklagers ab, welches durch Verdrehen um seine Achse verstellbar ist. Am Umfang des Gehäuses ist eine Verzahnung angeordnet, in, die eine Schnecke eingreift, die von einem elektronisch angesteuerten Elektromotor angetrieben wird. Nachteilig ist hierbei jedoch, dass für größere Kupplungen wie sie bei Nutzfahrzeugen verwendet werden, ein relativ großer, teurer und schwerer Elektromotor vorgesehen werden muss.

In der US 20 55 258 A ist eine Einrichtung zur Betätigung einer Reibungskupplung gezeigt, bei welcher eine Rotationsbewegung einer Welle über einen exzentrischen Zapfen in eine Linearbewegung eines Keils eines Keilgetriebes gewandelt wird, welche wiederum in eine axiale Verschiebung von Reibungselementen der Kupplung gewandelt wird. Dieser Aufbau ist jedoch relativ komplex.

Der vorliegenden Erfindung liegt die Aufgabe zugrunde, einen Kupplungssteller der eingangs erwähnten Art derart weiter zu entwickeln, dass er einfach und kompakt aufgebaut ist und gleichzeitig eine hohe Kraftdichte aufweist. Erfindungsgemäß wird diese Aufgabe durch die kennzeichnenden Merkmale von Anspruch 1 gelöst.

### Vorteile der Erfindung

Indem der Stößel im wesentlichen in einer zur Mittelachse der Kupplung senkrechten Ebene angeordnet und an einem Drehglied eines dessen Drehbewegung in eine Linearbewegung des Ausrückers wandelnden Getriebes angekoppelt ist, kann auf den teuren Ausrückhebel verzichtet werden. Da nun der ohnehin vorhandene Stößel den Ausrückhebel ersetzt, aber lediglich Druckkräfte anstatt Biegemomente übertragen muss, kann er wie bisher mit relativgeringem Querschnitt dimensioniert werden. Der Verzicht auf den Ausrückhebei ermöglicht eine Anordnung des im Stand der Technik am Getriebegehäuse der Antriebsmaschine außen angeflanschten Kupplungsstellers zumindest teilweise innerhalb dieses Gehäuses. Hierdurch reduziert sich der benötigte Bauraum in vorteilhafter Weise.

Ferner lassen sich mit Drehbewegungen in eine Linearbewegung wandelnde Getrieben wie beispielsweise Spindel-Mutter-Getrieben oder Scheiben mit ineinandergreifenden Rampenverzahnungen wesentlich größere Kraftübersetzungen realisieren als mit dem Ausrückhebel des Stands der Technik. Infolgedessen muss der Kupplungssteller geringere Betätigungskräfte aufwenden, was wiederum einen kleineren Kupplungssteller ermöglicht. Außerdem bauen solche Getriebe in der Regel sehr klein, was den benötigten Bauraum weiter einschränkt.

Bei manchen Kupplungsstellem wird der Kupplungsweg durch einen Wegmeßsensor ermittelt, der beispielsweise den vom Stößel zurückgelegten Weg mißt. Aufgrund der durch das im Rahmen der Erfindung verwendeten Getriebes ermöglichten größeren Kraftübersetzung ergeben sich wesentlich längere Betätigungswege des Stößels. Hierdurch reduziert sich die benötigte Auflösung des Wegmeßsensors, was den Einsatz eines kostengünstigeren Wegmeßsystems erlaubt.

Der Stößel wird durch eine Kolbenstange eines druckmittelbetätigten Kolbens einer Zylinder-Kolbeneinheit gebildet, wobei das Druckmittel eine Hydraulikflüssigkeit oder Druckluft ist. Die Betätigung der Kupplung erfolgt dann durch Druckbeaufschlagung oder Druckentlastung einer Druckkammer der Zylinder-Kolbeneinheit des Kupplungsstellers. Ein solchermaßen ausgebildeter Kupplungssteller kann sowohl für sich alleine als auch in Kombination mit einem automatisierten Schaltgetriebe eingesetzt werden, bei welchem das Kupplungspedal entfällt.

Durch die in den Unteransprüchen aufgeführten Maßnahmen sind vorteilhafte Weiterbildungen und Verbesserungen der in den unabhängigen Patentansprüchen angegebenen Erfindung möglich.

Um die exzentrische Anlenkung bzw. Ankoppelung der Kolbenstange an dem Drehglied zu realisieren, kann eine gedachte Verlängerung der Kolbenstange von der Mittelachse des Drehglieds um ein Stück beabstandet sein.

Bei den Kupplungsstellern des Stands der Technik beinhaltet jeder einzelne Arbeitshub des Kupplungsstellers stets den für die Betätigung der Kupplung notwendigen Kupplungsbetätigungshub und zusätzlich einen Verschleißnachführungshub zum Ausgleich des Kupplungsverschleißes. Dies bedeutet, dass der Arbeitshub mit steigendem Verschleiß immer größer wird und der Kupplungssteller demzufolge für den im ungünstigsten Fall den dem gesamten zulässigen Verschleiß entsprechenden Verschleißnachführungshub und zusätzlich den normalen Kupplungsbetätigungshub beinhaltenden Arbeitshub ausgelegt werden muß. Dies fällt umso mehr ins Gewicht als in der Praxis, beispielsweise bei Nutzfahrzeugen, der maximale Verschleißnachführungshub wesentlich größer ist als der Kupplungsbetätigungshub. Folglich baut der bekannte Kupplungssteller relativ groß und ist teuer in der Herstellung.

Gemäß einer besonders bevorzugten Ausführungsform der Erfindung ist die zu Beginn einer Kupplungsbetätigung vorliegende Ausgangsposition des Ausrückers abhängig vom Verschleiß der Kupplung durch einen vorangehenden, einen Kupplungsbetätigungshub und einen Verschleißnachführungshub beinhaltenden Arbeitshub des Stößels einstellbar. Gleichzeitig ist der erfindungsgemäße Kupplungssteller für den den Verschleißnachführungshub und den Kupplungsbetätigungshub beinhaltenden größeren Arbeitshub des Stößels und einen lediglich den Kupplungsbetätigungshub beinhaltenden kleineren Arbeitshub von einem Steuergerät jeweils gesondert angesteuert. Folglich erfolgt nur bei einigen der Arbeitshübe des Kupplungsstellers gleichzeitig mit dem Kupplungsbetätigungshub auch eine Verschleißnachstellung, während der die Ausgangsposition des Ausrückers in Verschleißnachstellrichtung nachgestellt wird. Bei den restlichen Arbeitshüben fällt hingegen lediglich der stets gleich große Kupplungsbetätigungshub an. Beispielsweise erfolgt ein Arbeitshub mit Verschleißnachstellung erst nach einer Vielzahl von reinen Kupplüngsbetätigungshüben und der nächste Arbeitshub mit Verschleißnachstellung wiederum erst nach einer Vielzahl von reinen Kupplungsbetätigungshüben. Aufgrund dessen fällt der Anteil des für die Verschleißnachstellung benötigten Arbeitshubes bei jedem Schritt der Verschleißnachstellung gegenüber dem reinen Kupplungsbetätigungshub sehr klein aus, so dass der vom Kupplungssteller insgesamt zur Verfügung zu stellende Arbeitshub fast vollständig aus dem reinen Kupplungsbetätigungshub besteht. Folglich ist der Arbeitshub wesentlich kürzer als beim Stand der Technik, so dass der Kupplungssteller kleiner und folglich kostengünstiger dimensioniert werden kann. Darüber hinaus übernimmt der Stößel des Kupplungsstellers eine vorteilhafte Doppelfunktion, da er einerseits für die Kupplungsbetätigung und gleichzeitig für die Verschleißnachstellung vorgesehen ist.

Das Steuergerät ist beispielsweise derart ausgebildet, dass es, wenn der ermittelte Kupplungsverschleiß einen vorgegebenen Wert überschritten hat und ein Anforderungssignal zur Kupplungsbetätigung vorliegt, beim Kupplungssteller einen den Verschleißnachführungshub und den Kupplungsbetätigungshub beinhaltenden Arbeitshub auslöst. Hierdurch wird ein Kriterium dafür vorgegeben, wann ein Arbeitshub mit Verschleißnachstellung stattfinden soll.

Um die Druckkammer der Zylinder-Kolbeneinheit mit Druck zu beaufschlagen bzw. eine Druckentlastung vorzunehmen, sind meist elektromagnetische Ventile vorhanden. Um im Falle eines Defekts dieser Ventile einen Austausch mit einem möglichst geringen Montageaufwand zu ermöglichen, ragen die Ventile der Zylinder-Kolbeneinheit wenigstens teilweise aus dem Getriebegehäuse heraus.

Weiterhin ist vorzugsweise eine Verschleißnachstelleinrichtung mit einem Mutter-Spindeltrieb vorgesehen, wobei eine axialfeste Spindel des Mutter-Spindeltriebs in dem die Mutter bildenden und drehfest gehaltenen Ausrücker in Kupplungsbetätigungsrichtung verschraubbar ist, wobei die Spindel mit einem Stellglied der Verschleißnachstelleinrichtung drehbar gekoppelt ist.

Gemäß einer besonders zu bevorzugenden Weiterbildung wird das Stellglied durch eine Zahnscheibe mit einem umlaufenden Zahnkranz gebildet, wobei ein Verschleißnachführungshub in Umfangsrichtung gesehen wenigstens der Zahnteilung der Zahnscheibe entspricht. Der nachgestellte Verschleißweg ist dann durch Zählen der Verschleißnachstellhübe ermittelbar und in einem auslesbaren Speicher des Steuergeräts speicherbar, beispielsweise in einem EEPROM. Dann kann der aktuelle Kupplungsverschleiß jederzeit aus dem Speicher ausgelesen und die Kupplung im Rahmen einer vorausschauenden Wartung bei Erreichen der Verschleißgrenze erneuert werden.

Das eine Drehbewegung des Drehglieds in eine Linearbewegung des Ausrückers wandelnde Getriebe beinhaltet vorzugsweise einen Mutter-Spindeltrieb, bei welchem der Ausrücker die Mutter bildet und die Spindel mit dem Drehglied drehkoppelbar ist, wobei die Spindel axialfest und der Ausrücker drehfest geführt ist. Diese Art von Getriebe ist zum einen sehr kostengünstig, zum kann ein großer Bereich von Übersetzungen abgedeckt werden, beispielsweise durch Verwendung von Kugelumlaufspindeltrieben.

Die Spindel und die Mutter des Mutter-Spindeltriebs zum Betätigen des Ausrücklagers während eines Kupplungsbetätigungshubes sind vorzugsweise identisch mit der Spindel bzw. mit der Mutter der Verschleißnachstelleinrichtung, so dass diese Bauteile in vorteilhafter Weise eine Doppelfunktion ausüben. Damit wird die Anzahl der Bauteile des Kupplungsstellers und folglich auch die Fertigungskosten reduziert.

Vorzugsweise ist das Drehglied durch eine Koppeleinrichtung mit der Zahnscheibe drehkoppelbar, welche mit der Spindel des Mutter-Spindeltriebs drehfest verbunden ist. Die Koppeleinrichtung ist dann derart ausgebildet, dass bei einem lediglich den Kupplungsbetätigungshub beinhaltenden kleineren Arbeitshub des Stößels die Zahnscheibe mit dem Drehglied stets drehfest gekoppelt ist, während bei dem den Verschleißnachführungshub und den Kupplungsbetätigungshub beinhaltenden größerem Arbeitshub des Stößels die Koppeleinrichtung eine bestimmte Relativdrehung zwischen der Zahnscheibe und dem Drehglied zuläßt, um die Ausgangsposition des Ausrückers für den folgenden Arbeitshub in eine den Verschleiß der Kupplung zumindest teilweise kompensierende Richtung zu verlegen.

Die Koppeleinrichtung beinhaltet beispielsweise wenigstens ein am Drehglied beweglich geführtes und in Zahnzwischenräume des Zahnkranzes eingreifbares Koppelelement, welches während des den Verschleißnachführungshub und den Kupplungsbetätigungshub beinhaltenden größeren Arbeitshubes durch Anschlagen gegen einen Anschlag betätigbar ist.

Gemäß einer weiteren Ausführungsform kann das eine Drehbewegung des Drehglieds in eine Linearbewegung des Ausrückers wandelnde Getriebe eine Drehscheibe aufweisen, an welcher der Stößel exzentrisch angelenkt ist, mit einer rampenförmigen Verzahnung, welche in eine komplementäre rampenförmige Verzahnung einer weiteren, axial verschieblichen, aber drehfest gehaltenen und mit dem Ausrücker gekoppelten Gegenscheibe eingreift. Hierdurch ist durch einen äußerst einfachen Aufbau eine Umlenkung der linearen Stößelbewegung senkrecht zur Mittelachse der Kupplung in eine lineare Bewegung des Ausrückers in Richtung dieser Mittelachse sowie gleichzeitig eine vorteilhaft hohe Kraftübersetzung gegeben. Um Verschleißerscheinungen und Reibungsverluste zu minimieren, sind gemäß einer weiteren vorteilhaften Maßnahme die beiden Verzahnungen relativ zueinander wälzgelagert, beispielsweise durch Kugellager.

Bei diesem Ausführungsbeispiel ist bei dem den Verschleißnachführungshub und den Kupplungsbetätigungshub beinhaltenden größeren Arbeitshub des Stößels die Zahnscheibe derart in Drehung versetzbar, dass die Ausgangsposition des Ausrückers für den folgenden Arbeitshub in eine den Verschleiß der Kupplung zumindest teilweise kompensierende Richtung verlegt wird, und dass bei einem lediglich den Kupplungsbetätigungshub beinhaltenden kleineren Arbeitshub des Stößels die Zahnscheibe nicht in Drehung versetzt wird.

### Zeichnung

Ausführungsbeispiele der Erfindung sind in der Zeichnung dargestellt und in der nachfolgenden Beschreibung näher erläutert. In der Zeichnung zeigt
- Fig.1: eine schematische Schnittdarstellung einer Kupplung eines Nutzfahrzeugs, welche durch einen Kupplungssteller gemäß einer ersten Ausführungsform der Erfindung betätigt ist;
- Fig.2: eine Vorderansicht des Kupplungsstellers von Fig.1;
- Fig.3: eine schematische Schnittdarstellung einer Kupplung eines Nutzfahrzeugs, welche durch einen Kupplungssteller gemäß einer weiteren, bevorzugten Ausführungsform der Erfindung betätigt ist;
- Fig. 4: eine Seitenansicht des Kupplungsstellers von Fig.3 in einer ersten Position der Verschleißnachstellung;
- Fig.5: eine Seitenansicht einer weiteren Ausführungsform eines Kupplungsstellers in einer zweiten Position der Verschleißnachstellung.

### Beschreibung der Ausführungsbeispiele

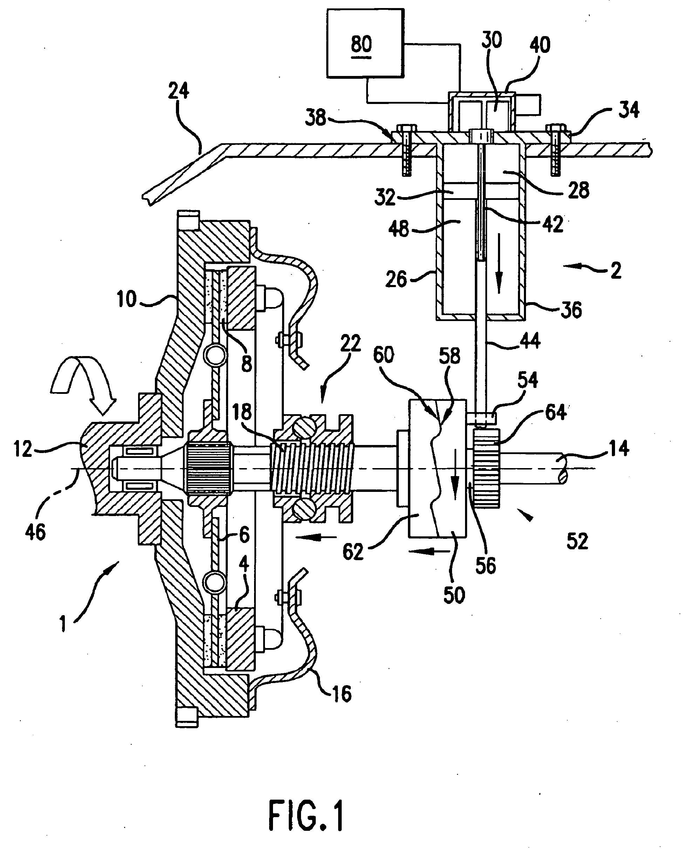

Die in Fig.1 gezeigte und insgesamt mit der Bezugszahl 1 bezeichnete Reibungskupplung eines Nutzfahrzeugs zwischen einem Antriebsmotor und einem Getriebe ist vorzugsweise eine Einscheiben-Trockenkupplung, die von einem erfindungsgemäßen Kupplungssteller 2 gemäß einer ersten Ausführungsform betätigt wird.

Die Reibungskupplung 1 besteht aus einer Druckplatte 4, einer Kupplungsscheibe 6, auf die zwei Reibbeläge 8 aufgeklebt oder aufgenietet sind, und einer weiteren Reibfläche, die von einem Motorschwungrad 10 gebildet wird. Motorschwungrad 10 und Druckplatte 4 sind mit einer Abtriebswelle 12 der Antriebsmaschine und die Kupplungsscheibe 6 mit einer Getriebeeingangswelle 14 verbunden. Zur Kraftübertragung bei geschlossener Reibungskupplung 1 spannt eine Tellerfeder 16 die Kupplungsscheibe 6 zwischen Druckplatte 4 und Motorschwungrad 10 ein. Zum Öffnen der Reibungskupplung 1, z.B. für einen Schaltvorgang, entlastet ein auf einem die Getriebeeingangswelle 14 koaxial umgebenden Gewinderohr 18 mittels eines Gewindes 20 verschraubbares Ausrücklager 22 die Druckplatte 4 von der Tellerfeder 16. Genauer ist das Gewinderohr 18 in das drehfest gehaltene Ausrücklager 22 hinein- oder aus diesem heraus schraubbar.

Der Kupplungssteller 2 weist eine zumindest teilweise innerhalb eines Getriebegehäuses 24 der Antriebsmaschine des Nutzfahrzeugs angeordnete Betätigungseinheit auf, vorzugsweise in Form einer druckmittelbetätigten Zylinder-Kolbeneinheit 26 mit einer Druckkammer 28, welche mittels Magnetventile 30 mit Druckluft oder Hydraulikflüssigkeit beaufschlagbar ist, um einen linear geführten Kolben 32 zu betätigen. Hierzu ist die Zylinder-Kolbeneinheit 26 durch eine Öffnung in das Getriebegehäuse 24 eingeführt, bis ein endseitiger Kragen 34 eines Zylinders 36 der Zylinder-Kolbeneinheit 26 an einem Befestigungsflansch 38 des Getriebegehäuses 24 anschlägt und dort beispielsweise mittels Schrauben befestigt wird. Die Zylinder-Kolbeneinheit 26 ist vorzugsweise am oder im Getriebegehäuse 24 derart befestigt, dass vom Zylinder 36 endseitig weg ragende Magnetventile 30 zum Druckbeaufschlagen oder Druckentlasten der Druckkammer 28 in Bezug zum Getriebegehäuse 24 von außen her zugängig sind. Im vorliegenden Fall werden die Magnetventile 30 dann von einem Ventilgehäuse 40 gekapselt, welches von außen auf die Magnetventile 30 aufgesetzt und am Getriebegehäuse 24 befestigt ist. Im Zylinder 36 ist auch ein Wegmeßsystem 42 integriert, welches den zurückgelegten Weg des Kolbens 32 mißt.

Alternativ könnte die Betätigungseinheit 26 auch elektromotorisch ausgeführt sein, wie beispielsweise in der DE 100 14 225 A1 beschrieben. Unabhängig davon, wie die Betätigungskraft erzeugt wird, ist in jedem Fall ein linear betätigter Stößel 44 vorhanden, welcher im wesentlichen in einer zur Mittelachse 46 der Reibungskupplung 1 senkrechten Ebene angeordnet ist. Im vorliegenden Fall einer druckmittelbetätigten Zylinder-Kolbeneinheit 26 wird der Stößel vorzugsweise durch ein zentrales Kolbenrohr 44 gebildet, welche am Kolben 32 senkrecht befestigt und aus dem Zylinder 36 kupplungsseitig herausragt. Das Kolbenrohr 44 ist an einem Stab 48 des Wegmeßsystems 42 geführt, welches je nach der Eintauchtiefe des innerhalb des Kolbenrohres 44 befindlichen Abschnitts des Stabes 48 ein Signal erzeugt.

Durch die beschriebene Anordnung ergibt sich zwangsläufig die in Fig.1 gezeigte, stehende Lage der Zylinder-Kolbeneinheit 26, senkrecht zur Mittelachse 46 der Reibungskupplung 1. Das Kolbenrohr 44 ist endseitig an einem mit der Mittelachse 46 der Reibungskupplung 1 koaxialen Drehglied 50 eines eine Drehbewegung in eine Linearbewegung des Ausrücklagers 22 wandelnden Getriebes 52 mittels eines Gelenks 54 exzentrisch angelenkt. Hierbei ist das Kolbenrohr 44 vorzugsweise einstückig ausgeführt, jedoch könnte es auch aus mehreren aneinander befestigten und beispielsweise aufgrund der Einbauerfordernisse zueinander parallel oder winkelig angeordneten Abschnitten bestehen.

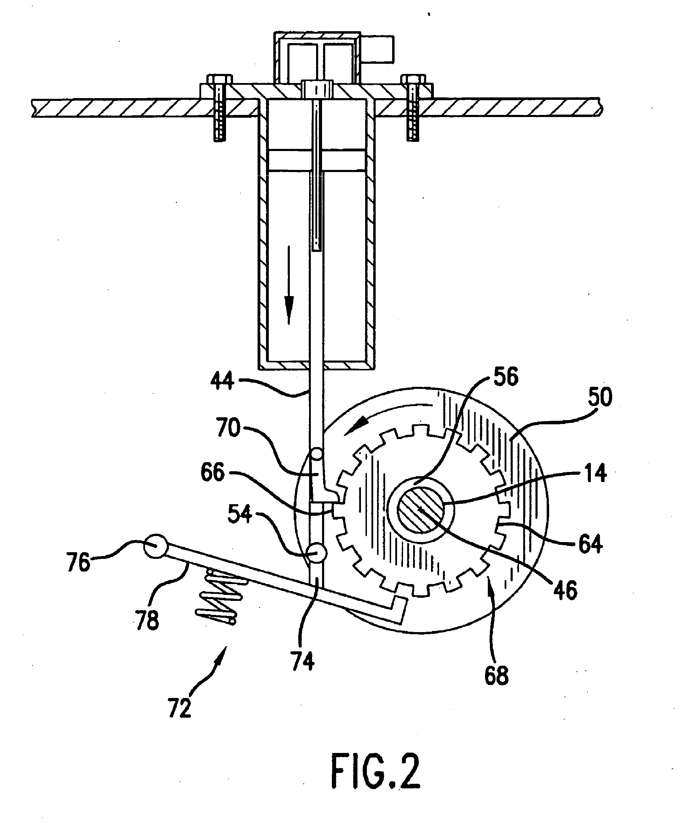

Entscheidend ist, dass durch das Kolbenrohr 44 eine lineare Bewegung auf das Drehglied 50 in einer Weise übertragbar ist, dass Letzeres in Drehbewegung versetzt werden kann. Wie aus Fig.2 hervorgeht, ist hierzu notwendig, dass eine gedachte Verlängerung des Kolbenrohres 44 von der Mittelachse des Drehglieds 50, welche mit der Mittelachse 46 der Reibungskupplung 1 identisch ist, um ein Stück beabstandet ist. Das Drehglied ist vorzugsweise eine Drehscheibe 50, die auf einem Innenrohr 56 axialfest aber drehbar gehalten ist, welches innerhalb des das Ausrücklager 22 tragenden Gewinderohres 18 teleskopartig axial verschieblich aber drehfest gehalten ist, beispielsweise mittels ineinandergreifender Keilwellenprofile. An dieser Drehscheibe 50 ist das Kolbenrohr 44 mittels des Gelenks 54 exzentrisch angelenkt.

Die Drehscheibe 50 hat eine sich axial erstreckende rampenförmige Verzahnung 58, welche in eine komplementäre rampenförmige Verzahnung 60 einer Gegenscheibe 62 eingreift, welche mit dem Gewinderohr 18 axialfest verbunden und gegenüber der Umgebung drehfest gehalten ist. Hierdurch ist die Gegenscheibe 62 mit dem Ausrücklager 22 axial gekoppelt. Das Innenrohr 56 ragt auf der vom Ausrücklager 22 weg weisenden Seite durch eine zentrale Durchgangsbohrung der Drehscheibe 50n hindurch und ist endseitig mit einer Zahnscheibe 64 fest verbunden, welche die Drehscheibe 50 stirnseitig kontaktiert. Darüber hinaus ragt die Getriebeeingangswelle 14 aus dem Ende des Innenrohres 56 heraus, an welchem die Zahnscheibe 64 angeordnet ist, um sich weiter in das Getriebegehäuse 24 hinein zu erstrecken.

Den rampenförmigen Verzahnungen 58, 60 ist vorzugsweise ein in Umfangrichtung wirkendes Wälzlager, beispielsweise ein Kugellager zwischengeordnet, um Verschleiß und Reibung zu minimieren. Außerdem ist eine Rückstellfeder vorgesehen, welche die Drehscheibe 50 gegenüber der Gegenscheibe 62 in die Fig.1 gezeigte Stellung zurückdrängt, in welcher die beiden Verzahnungen 58, 60 vollständig ineinander greifen und die Reibungskupplung 1 sich in eingekuppeltem Zustand befindet. Alternativ kann der Kolben 32 durch eine innerhalb des Zylinders 36 gehaltene Rückstellfeder in die eingekuppelte Richtung vorgespannt sein. Aus Maßstabsgründen ist das Wälzlager und die Rückstellfeder in Fig.1 jedoch nicht dargestellt.

Wird nun die Druckkammer 28 der Zylinder-Kolbeneinheit 26 mit Druckmittel beaufschlagt, so verschiebt sich der Kolben 32 gemäß der in Fig.1 gezeigten Pfeilrichtung nach unten, wobei die Drehscheibe 50 gegen die Wirkung der Rückstellfeder aufgrund der exzentrischen Anlenkung des Kolbenrohres 44 in Pfeilrichtung in Drehung versetzt wird. Hierdurch gleiten die rampenförmigen Verzahnungen 58, 60 in Umfangsrichtung aneinander entlang, wodurch die Gegenscheibe 62 in axialer Richtung von der Drehscheibe 50 weg gedrückt wird, welche sich an der Zahnscheibe 64 axial abstützt. Da andererseits die Gegenscheibe 62 auf dem Gewinderohr 18 axialfest gehalten ist, bewegt sich dieses gegenüber dem axialfest gehaltenen Innenrohr 56 nach links und nimmt dabei das Ausrücklager 22 mit. Das Ausrücklager 22 wird dann in der durch den Pfeil in Fig.1 gezeigten Richtung axial verschoben, wodurch die Druckplatte 4 von der Tellerfeder 16 entlastet wird. Die Reibungskupplung 1 befindet sich dann in ausgekuppeltem Zustand. Zum Einkuppeln bewirkt eine Druckentlastung der Druckkammer 28 eine Verschiebung des Kolbens 32 nach oben und somit eine Rückdrehung der Drehscheibe 50 in die in Fig.1 gezeigte Position, in welcher die beiden Verzahnungen 58, 60 wieder vollständig ineinander greifen.

In Fig.2 ist die Situation dargestellt, bei welcher bei einem längeren, einen Verschleißnachführungshub und einen Kupplungsbetätigungshub beinhaltenden Arbeitshub ein Zahn 66 des Zahnkranzes 68 der Zahnscheibe 64 durch einen vom Stößel 44 seitlich weg ragenden Mitnehmer 70 kontaktierbar und die Zahnscheibe 64 zusammen mit dem Innenrohr 56 und dem Gewinderohr 18 dadurch derart in Drehung versetzbar ist, dass das Ausrücklager 22 in eine den Verschleiß der Reibungskupplung 1 zumindest teilweise kompensierende Richtung verstellt wird. Es ist anhand von Fig.2 auch leicht vorstellbar, dass bei einem kürzeren, lediglich den Kupplungsbetätigungshub beinhaltenden Arbeitshub des Stößels 44 der Zahn 66 vom Mitnehmer 70 nicht erreicht wird und folglich auch keine Drehung der Zahnscheibe 64 und damit auch kein Verstellen des Ausrücklagers 22 auf dem Gewinderohr 18 stattfindet. Der Mitnehmer 70 ist an dem Stößel 44 vorzugsweise derart angelenkt und geformt, dass er bei einem Rückhub des Stößels 44 seitlich ausschwenken kann und folglich die ihm gegenüberliegenden Zähne des Zahnkranzes 68 passiert, ohne dass die Zahnscheibe 64 in Drehung versetzt wird.

Zur Verriegelung der Drehfreiheit der Zahnscheibe 64 ist eine Verriegelungseinrichtung 72 vorgesehen, welche durch das freie, über das Gelenk 54 hinaus ragende Ende 74 des Stößels 44 nur dann entriegelbar ist, wenn dieser den Verschleißnachführungshub und den Kupplungsbetätigungshub beinhaltenden Arbeitshub ausführt. Im anderen Fall, also bei einem reinen Kupplungsbetätigungshub des Stößels 44 reicht hingegen der Hubweg nicht aus, um die Verriegelungseinrichtung 72 zu entriegeln. Die Verriegelungseinrichtung 72 besteht vorzugsweise aus einem in den Zahnkranz 68 eingreifbaren, in Eingriffsrichtung federbelasteten und an einem gehäusefesten Gelenk 76 angelenkten Hebel 78, welcher nur im Falle eines den Verschleißnachführungshub und den Kupplungsbetätigungshub beinhaltenden Arbeitshubes vom Stößel 44 außer Eingriff mit dem Zahnkranz 68 gebracht wird und welcher andernfalls, d.h. bei einem reinen Kupplungsbetätigungshub federbelastet mit diesem in Eingriff bleibt.

Mit dem vorangehend beschriebenen Kupplungssteller 2 ist die zu Beginn einer Kupplungsbetätigung vorliegende Ausgangsposition des Ausrücklagers 22 abhängig vom Verschleiß der Reibungskupplung 1 durch einen vorangehenden, den Kupplungsbetätigungshub und den Verschleißnachführungshub beinhaltenden Arbeitshub des Stößels 44 einstellbar. Gleichzeitig ist der erfindungsgemäße Kupplungssteller 2 für den den Verschleißnachführungshub und den Kupplungsbetätigungshub beinhaltenden Arbeitshub und einen lediglich den Kupplungsbetätigungshub beinhaltenden Arbeitshub von einem Steuergerät 80 jeweils gesondert angesteuert. Die Steuerroutinen des Steuergeräts 80 sind vorzugsweise derart ausgebildet, dass nur bei einigen der Arbeitshübe des Kupplungsstellers 2 gleichzeitig mit dem Kupplungsbetätigungshub auch ein Verschleißnachführungshub stattfindet, während der die Ausgangsposition des Ausrücklagers 22 in Verschleißnachstellrichtung nachgestellt wird. Bei den restlichen Arbeitshüben fällt hingegen lediglich der stets gleich große Kupplungsbetätigungshub an.

Entscheidend für das Auslösen eines Arbeitshubes mit eingeschlossenem Verschleißnachführungshub ist vorzugsweise die aktuelle Lage des sog. MitnahmePunktes der Reibungskupplung 1, der ihren Schließpunkt charakterisiert und welcher mit zunehmendem Kupplungsverschleiß wandert. Die Lage des Mitnahmepunktes ist durch das Wegmeßsystem 42 erfaßbar, welches ein entsprechendes Signal an das Steuergerät 80 liefert. Das Steuergerät 80 ist derart ausgebildet, dass es, wenn der sich aus der aktuellen Lage des Mitnahmepunktes ergebende Kupplungsverschleiß einen vorgegebenen Wert überschritten hat und ein Anforderungssignal zur Kupplungsbetätigung vorliegt, beim Kupplungssteller 2 einen den Verschleißnachführungshub und den Kupplungsbetätigungshub beinhaltenden Arbeitshub auslöst, wie er vorangehend beschrieben wurde. Schließlich ist vorgesehen, dass der nachgestellte Verschleißweg durch Zählen der Verschleißnachführungshübe ermittelbar und in einem auslesbaren Speicher des Steuergeräts 80, beispielsweise einem EEPROM speicherbar ist. Jeder Verschleißnachführungshub umfasst vorzugsweise eine Drehung der Zahnscheibe 64 um einen Zahn. Der aktuelle Kupplungsverschleiß ist jederzeit aus dem Speicher auslesbar und im Rahmen einer vorausschauenden Wartung kann die Reibungskupplung bei Erreichen der Verschleißgrenze erneuert werden.

Selbstverständlich kann der erfindungsgemäße Kupplungssteller 2 nicht nur zur Betätigung einer Einscheiben-Trockenkupplung sondern für jegliche Art von Kupplung verwendet werden, beispielsweise für eine nasse Reibungskupplung oder eine Mehrscheibenkupplung.

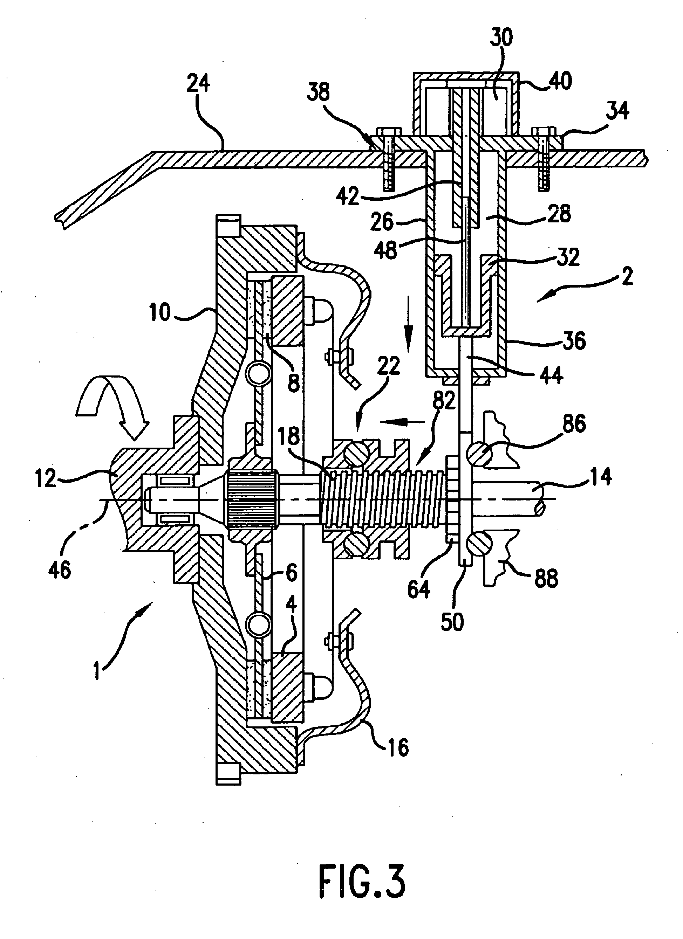

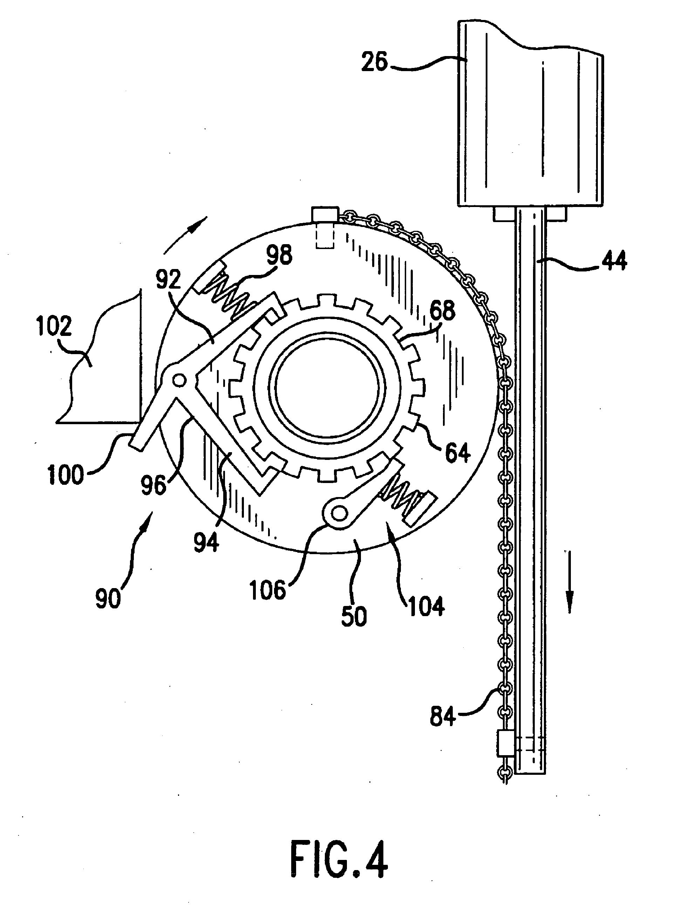

Bei dem weiteren, bevorzugten Ausführungsbeispiel der Erfindung nach den Fig.3 und 4 sind die gegenüber dem vorhergehenden Beispiel gleich bleibenden und gleichwirkenden Teile durch die gleichen Bezugszeichen gekennzeichnet. Im Unterschied zu diesem beinhaltet das eine Drehbewegung der Drehscheibe 50 in eine Linearbewegung des Ausrücklagers 22 wandelnde Getriebe einen Mutter-Spindeltrieb 82, bei welchem das Ausrücklager 22 die Mutter bildet und ein Spindelrohr 18 mit der Drehscheibe 50 drehkoppelbar ist, wobei das Spindelrohr 18 axialfest und das Ausrücklager 22 drehfest geführt ist. Das Spindelrohr 18 besitzt am Außenumfang ein Gewinde mit großer Steigung, welches so ausgelegt ist, dass durch Drehung des Spindelrohres 18 eine für die Kupplungsbetätigung ausreichende Ausrückbewegung des Ausrücklagers 22 entsteht. Beispielsweise kann der Spindel-Muttertrieb 82 durch eine Kugelumlaufspindel verwirklicht sein, so dass auch bei großen Kupplungskräften und einer hohen Anzahl von Kupplungsbetätigungen ein reibungs- und verschließarmer Bewegungsablauf möglich ist.

Weiterhin ist die Kolbenstange 44 nicht direkt mit der Drehscheibe 50 sondern über ein Zugelement 84, beispielsweise einen Riemen oder eine Kette verbunden, wie Fig.4 zeigt. Die vorzugsweise zu verwendende Kette 84 ist einendseitig exzentrisch, z.B. am Umfang der Drehscheibe 50 befestigt und bei geschlossener Kupplung zumindest über einen Teilkreis auf der Drehscheibe 50 aufgewickelt. Anderendseitig ist sie mit dem Ende der Kolbenstange 44 verbunden. Eine durch den Pfeil in Fig.4 versinnbildlichte Linearbewegung der Kolbenstange 44 ruft folglich eine Drehbewegung der Drehscheibe 50 im Uhrzeigersinn hervor. Mit Hilfe einer nicht dargestellten Feder wird ein Rückdrehen der Drehscheibe 50 sichergestellt. Falls als Mutter-Spindeltrieb 82 eine Kugelumlaufspindel mit großer Gewindesteigung eingesetzt wird, kann auf eine solche Feder unter Umständen auch verzichtet werden, da die Tellerfeder 16 der Reibungskupplung mit hoher Kraft auf das Ausrücklager 22 drückt. Durch Verwendung des Zugelements 84 kann der gleiche Arbeitshub der Kolbenstange 44 einen größeren Drehwinkel der Drehscheibe 50 als beim vorangehend beschriebenen Ausführungsbeispiel hervorrufen, weiterhin ist die Kippneigung des Kolbens 32 weniger ausgeprägt.

Die durch ein Axiallager 86 an einer Querwand 88 des Getriebegehäuses 24 abgestützte Drehscheibe 50 ist durch eine Koppeleinrichtung 90 mit der koaxialen Zahnscheibe 64 drehkoppelbar, welche wiederum mit dem Spindelrohr 18 des Mutter-Spindeltriebs 82 drehfest verbunden ist. Die Koppeleinrichtung 90 ist derart ausgebildet, dass bei einem lediglich den Kupplungsbetätigungshub beinhaltenden kleineren Arbeitshub der Kolbenstange 44 die Zahnscheibe 64 mit der Drehscheibe 50 stets drehfest gekoppelt ist, während bei dem den Verschleißnachführungshub und den Kupplungsbetätigungshub beinhaltenden größeren Arbeitshub der Kolbenstange 44 die Koppeleinrichtung 90 eine bestimmte Relativdrehung zwischen der Zahnscheibe 64 und der Drehscheibe 50 zuläßt, um die Ausgangsposition des Ausrücklagers 22 für den folgenden Arbeitshub in eine den Verschleiß der Reibungskupplung 1 zumindest teilweise kompensierende Richtung zu verlegen.

Die vorangehend beschriebenen Funktionen können beispielsweise dadurch realisiert sein, dass die Koppeleinrichtung 90 wenigstens ein an der Drehscheibe 50 angelenktes und mit zwei zahnkranzseitigen Schenkeln 92, 94 in Zahnzwischenräume des Zahnkranzes 68 eingreifbares Koppelelement 96 beinhaltet. Auf den einen Schenkel 92 des Koppelelements 96 wirkt eine vorgespannte Feder 98 derart, dass er in eine Zahnlücke des Zahnkranzes 68 vorgespannt wird. In dieser Stellung befindet sich der andere Schenkel 94 in ausgerückter Position, d.h. nicht in Eingriff mit dem Zahnkranz 68. Durch den Schenkel 92 des Koppelelements 96 ist dann die Drehscheibe 50 mit dem Zahnkranz 64 drehfest verbunden. Führt nun die Kolbenstange 44 den lediglich den Kupplungsbetätigungshub beinhaltenden kleineren Arbeitshub aus, so wird die in die Drehscheibe 50 eingeleitete Drehbewegung starr auf die Zahnscheibe 64 übertragen, um von dort auf das Spindelrohr 18 übertragen zu werden, dessen Drehung das als Spindel-mutter wirkende Ausrücklager 22 in Kupplungsbetätigungsrichtung bewegt, woraufhin die Reibungskupplung in ihren offenen Zustand gerät.

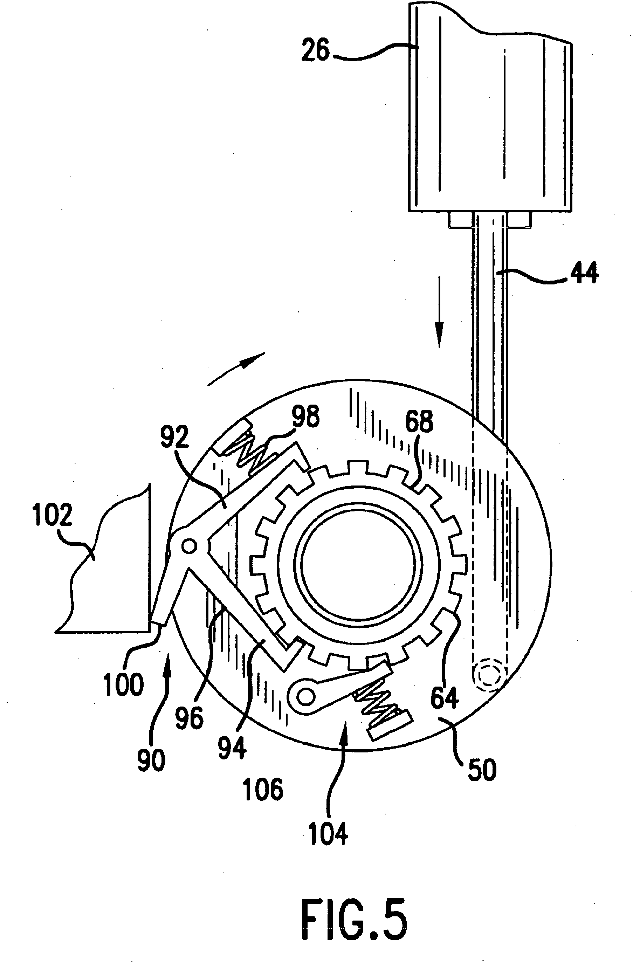

Führt die Kolbenstange 44 hingegen einen den Kupplungsbetätigungshub und den Verschleißnachführungshub beinhaltenden größeren Arbeitshub aus, so vergrößert sich der Drehwinkel der Drehscheibe 50 und ein weiterer Schenkel 100 des Koppelelements 96 schlägt gegen einen festen Anschlag 102 an, wodurch eine Drehung des Koppelelements 96 relativ zur Drehscheibe 50 hervorgerufen wird, wie aus Fig.5 hervorgeht, in welcher abweichend vom Ausführungsbeispiel von Fig.4 der Antrieb der Drehscheibe 50 wiederum durch eine direkte Anlenkung der Kolbenstange 44 realisiert, aber alle weiteren Bauteile oder Funktionen identisch wie bei der Ausführungsform von Fig.4 sind.

Die beiden zahnkranzseitigen Schenkel 92, 94 des Koppelelements 96 sind derart ausgebildet, dass während des Zeitraums, in welchem der eine Schenkel 92 gegen die Wirkung der Feder 98 mit dem Zahnkranz 68 außer Eingriff gerät, der andere, zuvor außer Eingriff befindliche Schenkel 94 in eine Zahnlücke des Zahnkranzes 68 eingreift. Die zeitliche Aufeinanderfolge des Ausrückens des einen Schenkels 92 und des Eingriffs des anderen Schenkels 94 in den Zahnkranz 68 sowie der Abstand der beiden Schenkel 92, 94 in Umfangsrichtung und sonstige relevanten geometrischen Faktoren sind dabei derart aufeinander abgestimmt, dass die Zahnscheibe 64 während der Schwenkbewegung des Koppelelements 96 kurzzeitig stehenbleibt, während sich die durch die Kolbenstange 44 weiterhin angetriebene Drehscheibe 50 weiterdreht, vorzugsweise um genau eine Zahnteilung. Die Zahnscheibe 64 wird dann gegenüber der Drehscheibe 50 im Gegenuhrzeigersinn um einen Zahn verstellt, was in einer Verlegung der axialen Ausgangsposition des Ausrücklagers 22 für den nachfolgenden Arbeitshub in eine den Verschleiß der Reibungskupplung 1 zumindest teilweise kompensierende Richtung resultiert. In Fig.3 bedeutet dies bei geschlossener Reibungskupplung 1 eine axiale Verschiebung des Ausrücklagers 22 nach rechts.

Eine Rückdrehsperre 104, beispielsweise in Form einer gegen den Zahnkranz 68 federvorgespannten Klaue 106 stellt sicher, dass die Zahnscheibe 64 während des Schließens der Reibungskupplung 1 nicht wieder in ihre alte Position zurückdreht.

### Bezugszahlenliste

- 1: Reibungskupplung
- 2: Kupplungssteller
- 4: Druckplatte
- 6: Kupplungsscheibe
- 8: Reibbeläge
- 10: Motorschwungrad
- 12: Abtriebswelle
- 14: Getriebeeingangswelle
- 16: Tellerfeder
- 18: Gewinderohr
- 20: Gewinde
- 22: Ausrücklager
- 24: Getriebegehäuse
- 26: Zylinder-Kolbeneinheit
- 28: Druckkammer
- 30: Magnetventile
- 32: Kolben
- 34: Kragen
- 36: Zylinder
- 38: Flansch
- 40: Ventilgehäuse
- 42: Wegmeßsystem
- 44: Kolbenrohr
- 46: Mittelachse
- 48: Stab
- 50: Drehscheibe
- 52: Getriebe
- 54: Gelenk
- 56: Innenrohr
- 58: Verzahnung
- 60: Verzahnung
- 62: Gegenscheibe
- 64: Zahnscheibe
- 66: Zahn
- 68: Zahnkranz
- 70: Mitnehmer
- 72: Verriegelungseinrichtung
- 74: Ende
- 76: Gelenk
- 78: Feder
- 80: Steuereinrichtung
- 82: Mutter-Spindeltrieb
- 84: Zugelement
- 86: Axiallager
- 88: Querwand
- 90: Koppeleinrichtung
- 92: Schenkel
- 94: Schenkel
- 96: Koppelelement
- 98: Feder
- 100: Schenkel
- 102: Anschlag
- 104: Rückdrehsperre
- 106: Klaue

## Patentansprüche

1. Kupplungssteller zur Betätigung einer Kupplung zwischen einem Antriebsmotor und einem Getriebe eines Kraftfahrzeugs, insbesondere eines Nutzfahrzeugs, beinhaltend einen linear betätigbaren Stößel, der auf einen mit einer Mittelachse der Kupplung koaxialen Ausrücker wirkt, **dadurch gekennzeichnet, dass** der Stößel (44) durch eine Kolbenstange (44) eines druckmittelbetätigten Kolbens (32) einer Zylinder-Kolbeneinheit (26) gebildet wird und im wesentlichen in einer zur Mittelachse (46) der Kupplung (1) senkrechten Ebene angeordnet und an einem Drehglied (50) eines dessen Drehbewegung in eine Linearbewegung des Ausrückers (22) wandelnden Getriebes (52; 82) exzentrisch angekoppelt ist.

2. Kupplungssteller nach Anspruch 1, **dadurch gekennzeichnet, dass** das Drehglied (50) mit der Mittelachse (46) der Kupplung (1) koaxial angeordnet ist.

3. Kupplungssteller nach Anspruch 1 oder 2, **dadurch gekennzeichnet, dass** die zu Beginn einer Kupplungsbetätigung vorliegende Ausgangsposition des Ausrückers (22) abhängig vom Verschleiß der Kupplung (1) durch einen vorangehenden, einen Kupplungsbetätigungshub und einen Verschleißnachführungshub beinhaltenden Arbeitshub des Stößels (44) einstellbar ist.

4. Kupplungssteller nach Anspruch 3, **dadurch gekennzeichnet, dass** er für den den Verschleißnachführungshub und den Kupplungsbetätigungshub beinhaltenden größeren Arbeitshub des Stößels (44) und einen lediglich den Kupplungsbetätigungshub beinhaltenden kleineren Arbeitshub des Stößels (44) von einem Steuergerät (80) jeweils gesondert angesteuert ist.

5. Kupplungssteller nach Anspruch 4, **dadurch gekennzeichnet, dass** ein Sensor (42) zur direkten oder indirekten Ermittlung des aktuellen Kupplungsverschleißes und zur Lieferung eines entsprechenden Signals an das Steuergerät (80) vorgesehen ist.

6. Kupplungssteller nach Anspruch 5, **dadurch gekennzeichnet, dass** das Steuergerät (80) derart ausgebildet ist, dass es, wenn der ermittelte Kupplungsverschleiß einen vorgegebenen Wert überschritten hat und ein Anforderungssignal zur Kupplungsbetätigung vorliegt, beim Kupplungssteller (2) einen den Verschleißnachführungshub und den Kupplungsbetätigungshub beinhaltenden Arbeitshub des Stößels (44) auslöst.

7. Kupplungssteller nach Anspruch 6, **dadurch gekennzeichnet, dass** der Stößel (44) elektrohydraulisch betätigt ist.

8. Kupplungssteller nach Anspruch 7, **dadurch gekennzeichnet, dass** der Stößel (44) direkt am Drehglied (50) angelenkt oder mit dem Drehglied (50) durch einen Zugelement (84) verbunden ist.

9. Kupplungssteller nach Anspruch 8, **dadurch gekennzeichnet, dass** eine gedachte Verlängerung der Kolbenstange (44) von der Mittelachse (46) des Drehglieds (50) um ein Stück beabstandet ist.

10. Kupplungssteller nach Anspruch 9, **dadurch gekennzeichnet, dass** er zumindest teilweise innerhalb eines Getriebegehäuses (24) einer Antriebsmaschine des Fahrzeugs angeordnet ist.

11. Kupplungssteller nach Anspruch 9 oder 10, **dadurch gekennzeichnet, dass** Ventile (30) zur Druckbeaufschlagung und/oder Druckentlastung einer Druckkammer (28) der Zylinder-Kolbeneinheit (26) wenigstens teilweise aus dem Getriebegehäuse (24) herausragen.

12. Kupplungssteller nach einem der Ansprüche 3 bis 11, **dadurch gekennzeichnet, dass** eine Verschleißnachstelleinrichtung einen Mutter-Spindeltrieb (82) beinhaltet, wobei eine axialfeste Spindel (18) des Mutter-Spindeltriebs in dem die Mutter bildenden und drehfest gehaltenen Ausrücker (22) in Kupplungsbetätigungsrichtung verschraubbar ist.

13. Kupplungssteller nach Anspruch 12, **dadurch gekennzeichnet, dass** die Spindel (18) mit einem Stellglied (64) der Verschleißnachstelleinrichtung drehbar gekoppelt ist.

14. Kupplungssteller nach Anspruch 13, **dadurch gekennzeichnet, dass** das Stellglied durch eine Zahnscheibe (64) mit einem umlaufenden Zahnkranz (68) gebildet wird, wobei ein Verschleißnachführungshub in Umfangsrichtung gesehen wenigstens der Zahnteilung der Zahnscheibe (64) entspricht.

15. Kupplungssteller nach Anspruch 14, **dadurch gekennzeichnet, dass** der nachgestellte Verschleißweg durch Zählen der Verschleißnachstellhübe ermittelbar und in einem auslesbaren Speicher des Steuergeräts (80) speicherbar ist.

16. Kupplungssteller nach Anspruch 15, **dadurch gekennzeichnet, dass** bei dem den Verschleißnachführungshub und den Kupplungsbetätigungshub beinhaltenden größeren Arbeitshub des Stößels (44) das Zahnscheibe (64) derart in Drehung versetzbar ist, dass die Ausgangsposition des Ausrückers (22) für den folgenden Arbeitshub in eine den Verschleiß der Kupplung (1) zumindest teilweise kompensierende Richtung verlegt wird, und dass bei einem lediglich den Kupplungsbetätigungshub beinhaltenden kleineren Arbeitshub des Stößels (44) das Zahnscheibe (64) nicht in Drehung versetzbar ist.

17. Kupplungssteller nach Anspruch 16, **dadurch gekennzeichnet, dass** das eine Drehbewegung des Drehglieds (50) in eine Linearbewegung des Ausrückers (22) wandelnde Getriebe (52) eine Drehscheibe (50) aufweist, an welcher der Stößel (44) exzentrisch angelenkt ist, mit einer rampenförmigen Verzahnung (58), welche in eine komplementäre rampenförmige Verzahnung (60) einer axial verschieblichen, aber drehfest gehaltenen und mit dem Ausrücker (22) gekoppelten Gegenscheibe (62) eingreift.

18. Kupplungssteller nach Anspruch 17, **dadurch gekennzeichnet, dass** eine eine Antriebsmotor- oder Getriebewelle (14) umschließende Teleskopeinrichtung vorgesehen ist, bestehend aus einem Innenteil (56) und einem auf diesem drehfest und axial verschieblichen Aussenteil, das durch die Spindel (18) des Mutter-Spindeltriebs gebildet wird.

19. Kupplungssteller nach Anspruch 18, **dadurch gekennzeichnet, dass** die Spindel durch ein Rohr (18) gebildet wird und die Drehscheibe (50) auf einem aus dem Rohr (18) herausragenden Abschnitt des Innenteils (56) drehbar aber axialfest gehalten und die Gegenscheibe (62) auf dem Rohr (18) dreh- und axialfest gehalten ist.

20. Kupplungssteller nach Anspruch 19, **dadurch gekennzeichnet, dass** die Zahnscheibe (64) mit dem Innenteil (56) drehfest gekoppelt ist.

21. Kupplungssteller nach Anspruch 20, **dadurch gekennzeichnet, dass** die die Zahnscheibe (64) durch eine Verriegelungseinrichtung (72) drehverriegelbar ist, welche durch den Stößel (44) nur dann entriegelbar ist, wenn er einen den Verschleißnachführungshub und den Kupplungsbetätigungshub beinhaltenden Arbeitshub ausführt.

22. Kupplungssteller nach Anspruch 15, **dadurch gekennzeichnet, dass** das eine Drehbewegung des Drehglieds (50) in eine Linearbewegung des Ausrückers (22) wandelnde Getriebe einen Mutter-Spindeltrieb (82) beinhaltet, bei welchem der Ausrücker (22) die Mutter bildet und die Spindel (18) mit dem Drehglied (50) drehkoppelbar ist, wobei die Spindel (18) axialfest und der Ausrücker (22) drehfest geführt ist.

23. Kupplungssteller nach Anspruch 22, **dadurch gekennzeichnet, dass** die Spindel (18) und die Mutter (22) des Mutter-Spindeltriebs (82) des Getriebes durch die Spindel (18) und die Mutter (22) der Verschleißnachstelleinrichtung gebildet werden.

24. Kupplungssteller nach Anspruch 23, **dadurch gekennzeichnet, dass** das Drehglied (50) durch eine Koppeleinrichtung (90) mit der Zahnscheibe (64) drehkoppelbar ist, welche mit der Spindel (18) drehfest verbunden ist.

25. Kupplungssteller nach Anspruch 24, **dadurch gekennzeichnet, dass** die Koppeleinrichtung (90) derart ausgebildet ist, dass bei einem lediglich den Kupplungsbetätigungshub beinhaltenden kleineren Arbeitshub des Stößels (44) die Zahnscheibe (64) mit dem Drehglied (50) stets drehfest gekoppelt ist , während bei dem den Verschleißnachführungshub und den Kupplungsbetätigungshub beinhaltenden größeren Arbeitshub des Stößels (44) die Koppeleinrichtung (90) eine bestimmte Relativdrehung zwischen der Zahnscheibe (64) und dem Drehglied (50) zuläßt, um die Ausgangsposition des Ausrückers (22) für den folgenden Arbeitshub in eine den Verschleiß der Kupplung (1) zumindest teilweise kompensierende Richtung zu verlegen.

26. Kupplungssteller nach Anspruch 25, **dadurch gekennzeichnet, dass** die Koppeleinrichtung (90) wenigstens ein am Drehglied (50) beweglich geführtes und in Zahnzwischenräume des Zahnkranzes (68) eingreifbares Koppelelement (96) beinhaltet.

27. Kupplungssteller nach Anspruch 26, **dadurch gekennzeichnet, dass** das Koppelelement (96) während des den Verschleißnachführungshub und den Kupplungsbetätigungshub beinhaltenden größeren Arbeitshubes des Stößels (44) durch Anschlagen gegen einen Anschlag (102) betätigbar ist.

## Claims

1. Clutch actuator for actuating a clutch between a driving engine and a transmission in a motor vehicle, in particular a commercial vehicle, comprising a ram adapted for linear operation, which acts upon a release element coaxial relative to the centre axis of the clutch, **characterised in that** said ram (44) is constituted by a piston rod (44) of a piston (32), operated by a pressurized medium , of a cylinder/piston unit (26) and disposed substantially in a plane orthogonal on said centre axis (46) of said clutch (1) and eccentrically coupled to a rotary element (50) of a transmission (52; 82) converting the element's rotary movement into a linear movement of said release element (22).

2. Clutch actuator according to Claim 1, **characterised in that** said rotary element (50) is coaxially disposed relative to said centre axis (46) of said clutch (1).

3. Clutch actuator according to Claim 1 or 2, **characterised in that** the initial position of said release element (22), which is present by the beginning of operation of the clutch, is adjustable in response to the wear on said clutch (1) caused by a preceding working travel of said ram (44), which encompasses a clutch-operating travel and a wear-readjusting travel.

4. Clutch actuator according to Claim 3, **characterised in that** it is controlled by a controller (80) separately for the longer working travel of said ram (44), which encompasses said wear-readjusting travel and said clutch-operating travel, and for a shorter operating travel of said ram (44) merely encompassing said clutch-operating travel.

5. Clutch actuator according to Claim 4, **characterised in that** a sensor (42) is provided for direct or indirect detection of the current clutch wear condition and for supply of a corresponding signal to said controller (80).

6. Clutch actuator according to Claim 5, **characterised in that** said controller (80) is so configured that, when said detected clutch wear condition has exceeded a predetermined value and a request signal for clutch operation is pending, it triggers a working travel of said ram (44) encompassing said wear-readjustment travel and said clutch-operating travel.

7. Clutch actuator according to Claim 6, **characterised in that** said ram (44) is electro-hydraulically operated.

8. Clutch actuator according to Claim 7, **characterised in that** said ram (44) is articulated directly to said rotary member (50) or is connected via a traction element (84) to said rotary member (50).

9. Clutch actuator according to Claim 8, **characterised in that** an imaginary extension of said piston rod (44) is spaced by a certain distance from said centre axis (46) of said rotary member (50).

10. Clutch actuator according to Claim 9, **characterised in that** it is disposed, at least partly, inside a transmission housing (24) of a prime mover of the vehicle.

11. Clutch actuator according to Claim 9 or 10, **characterised in that** valves (30) for pressurizing and/or pressure relief of a pressure chamber (28) in said cylinder/piston unit (26) project, at least partly, from said transmission housing (24).

12. Clutch actuator according to any of the Claims 3 to 11, **characterised in that** a wear-readjusting means includes a nut/screw drive mechanism (82), with a screw (18) of said nut/screw drive mechanism, which is axially stationary, being adapted to be screwed along the direction of clutch operation in said release element (22) constituting said nut and held in stationary position.

13. Clutch actuator according to Claim 12, **characterised in that** said screw (18) is coupled for rotation to an actuating element (64) of said wear-readjusting means.

14. Clutch actuator according to Claim 13, **characterised in that** said actuating element is constituted by a toothed disc (64) having a peripheral ring gear (68), with one wear-readjusting travel, seen along the peripheral direction, corresponding at least to the pitch of said toothed disc (64).

15. Clutch actuator according to Claim 14, **characterised in that** the readjusted wear travel can be detected by counting the wear-readjusting travels and can be stored in a read-out memory in said controller (80).

16. Clutch actuator according to Claim 15, **characterised in that** in the case of the longer working travel of said ram (44), which encompasses said wear-readjusting travel and said clutch-operating travel, said toothed disc (64) can be rotated in such a way that the initial position of said release element (22) is shifted for the following working travel in a direction compensating, at least in part, the wear on said clutch (1), and that in the case of a shorter working travel of said ram (44), which encompasses merely the clutch-operating travel, said toothed disc (64) cannot be caused to rotate.

17. Clutch actuator according to Claim 16, **characterised in that** said transmission (52), which converts a rotating movement of said rotary element (50) into a linear movement of said release element (22), comprises a rotary disc (50) on which said ram (44) is eccentrically articulated, with a ramp-shaped serration means (60) that engages into a complementary ramp-shaped serration means (60) on an axially displaceable counter-disc (62) which, however, is held so as to prevent its rotation and which is coupled to said release element (22).

18. Clutch actuator according to Claim 17, **characterised in that** a telescopic means is provided which includes a prime mover or transmission shaft (14) and which consists of an internal part (56) and an external part adapted to be displaced axially so as to prevent its rotation, which is constituted by said screw (18) of said nut/screw drive mechanism.

19. Clutch actuator according to Claim 18, **characterised in that** said screw is formed by a tube (18) and said rotary disc is held on a section of said interior part (56), which projects from said tube (18), so as to be rotatable but axially stationary while said counter-disc (62) is held on said tube (18) so as to prevent rotation but maintain it axially stationary.

20. Clutch actuator according to Claim 19, **characterised in that** said toothed disc (64) is coupled to said interior part (56) so as to prevent rotation.

21. Clutch actuator according to Claim 20, **characterised in that** said toothed disc (64) is adapted to be locked against rotation by means of a locking means (72) that can be unlocked by said ram (44) only when said ram performs a working travel encompassing said wear-readjusting travel and said clutch-operating travel.

22. Clutch actuator according to Claim 15, **characterised in that** said transmission converting a rotating movement of said rotary element (50) into a linear movement of said release element (22) includes a nut/screw drive mechanism (82) wherein said release element (22) constitutes the nut and said screw (18) is adapted to be coupled for rotation to said rotary element (50), with said screw (18) being axially stationary and said release element (22) being guided so as to prevent its rotation.

23. Clutch actuator according to Claim 22, **characterised in that** said screw (18) and said nut (22) of said nut/screw drive mechanism (82) of said transmission are constituted by said screw (18) and said nut (22) of said wear-readjusting means.

24. Clutch actuator according to Claim 23, **characterised in that** said rotary element (50) is connected by means of a coupling means (90) with said toothed disc so as to permit rotation, which disc is connected to said screw (18) so as to prevent its rotation.

25. Clutch actuator according to Claim 24, **characterised in that** said coupling means (90) is so configured that in the case of a shorter working travel of said ram (44), which merely encompasses said clutch-operating travel, said toothed disc (64) is permanently coupled to said rotary element (50) so as to prevents its rotation whereas in the case of the longer working travel of said ram (44), which encompasses said wear-readjusting travel and said clutch-operating travel, said coupling means (90) permits a defined relative rotation between said toothed disc (64) and said rotary element (50) in order to shift the initial position of said release element (22) for the following working travel into a direction compensating, at least partly, the wear on said clutch (1).

26. Clutch actuator according to Claim 25, **characterised in that** said coupling means (90) includes at least one coupling element (96) guided for movement on said rotary element (50) and adapted to be engaged in spaces between the teeth on said ring gear (68).

27. Clutch actuator according to Claim 26, **characterised in that** during the longer working travel of said ram (44), which encompasses said wear-readjusting travel and said clutch-operating travel, said coupling element (96) is adapted for actuation by hitting against a dog.

## Revendications

1. Actionneur d'embrayage à commander une boîte de vitesses entre un moteur d'entraînement et une boîte de vitesses dans un véhicule automobile, en particulier un véhicule utilitaire, comprenant une tige poussoir apte à être actionnée de façon linéaire, qui agit sur un élément de débrayage coaxial relativement à l'axe central de la boîte de vitesses, **caractérisé en ce que** ladite tige poussoir (44) est constituée par une tige de piston (44) d'un piston (32), commandé par un milieu sous pression, d'une unité à cylindre/piston (26) et disposé essentiellement dans un plan orthogonal sur ledit axe central (46) de ladite boîte de vitesses (1) et accouplé, de façon excentrique, à un composant rotatif (50) d'une boîte de vitesses (52; 82) transformant le mouvement rotatoire du composant en un mouvement linéaire dudit élément de débrayage (22).

2. Actionneur d'embrayage selon la revendication 1, **caractérisé en ce que** ledit composant rotatif (50) est disposé en position coaxiale relative audit axe central (46) de ladite boîte de vitesses (1).

3. Actionneur d'embrayage selon la revendication 1 ou 2, **caractérisé en ce que** la position de départ dudit élément de débrayage (22), qui existe quand l'actionnement de la boîte de vitesses commence, est ajustable en réponse à l'usure sur ladite boîte de vitesses (1), qui est créée par une course de travail précédente de ladite tige poussoir (44), cette course englobant une course d'actionnement de l'embrayage et une course de rattrapage de l'usure.

4. Actionneur d'embrayage selon la revendication 3, **caractérisé en ce qu'**il est commandé par une unité de commande (80) séparément pour la course de travail plus longue de ladite tige poussoir (44), qui englobe ladite course de rattrapage de l'usure et ladite course d'actionnement de l'embrayage, et pour une course de travail plus courte de ladite tige poussoir (44) n'englobant que ladite course d'actionnement de l'embrayage.

5. Actionneur d'embrayage selon la revendication 4, **caractérisé en ce qu'**un détecteur (42) est disposé pour la détection directe ou indirecte de l'état actuel d'usure sur la boîte de vitesses et pour l'alimentation d'un signal correspondant à ladite unité de commande (80).

6. Actionneur d'embrayage selon la revendication 5, **caractérisé en ce que** ladite unité de commande (80) est configurée d'une telle façon, que, quand ledit état d'usure établi sur ladite boîte de vitesses a dépassé une valeur prédéterminée et un signal de requête pour la commande de la boîte de vitesses est présent, il déclenche une course de travail de ladite tige poussoir (44) englobant ladite course de rattrapage d'usure et ladite course d'actionnement de l'embrayage.

7. Actionneur d'embrayage selon la revendication 6, **caractérisé en ce que** ladite tige poussoir (44) est commandé par voie électrique-hydraulique.

8. Actionneur d'embrayage selon la revendication 7, **caractérisé en ce que** ladite tige poussoir (44) est articulée directement audit composant rotatif (50) ou est raccordée, via un élément de traction (84) audit composant rotatif (50).

9. Actionneur d'embrayage selon la revendication 8, **caractérisé en ce qu'**un prolongement imaginaire de ladite tige de piston (44) est écarté, par une certaine distance, dudit axe central (46) dudit composant rotatif (50).

10. Actionneur d'embrayage selon la revendication 9, **caractérisé en ce qu'**il est disposé, au moins en partie, à l'intérieur d'un carter de boîte de vitesses (24) d'un moteur d'entraînement du véhicule.

11. Actionneur d'embrayage selon la revendication 9 ou 10, **caractérisé en ce que** des soupapes (30) pour la pressurisation et/ou la décompression d'une chambre de compression (28) dans ladite unité à cylindre/piston (26) font saillie, au moins en partie, dudit carter de boîte de vitesses (24).

12. Actionneur d'embrayage selon une quelconque des revendications 3 à 11, 11, **caractérisé en ce qu'**un moyen de rattrapage d'usure comprend un mécanisme d'entraînement à écrou/vis (82), à une vis (18) dudit mécanisme d'entraînement à écrou/vis, qui est stationnaire en sens axial, étant apte à être vissé le long du sens de commande de la boîte de vitesses dans ledit élément de débrayage (22) constituant ledit écrou et tenu en position stationnaire.

13. Actionneur d'embrayage selon la revendication 12, **caractérisé en ce que** ladite vis (18) est accouplée pour mouvement rotatoire à un élément actionneur (64) dudit moyen de rattrapage d'usure.

14. Actionneur d'embrayage selon la revendication 13, **caractérisé en ce que** ledit élément actionneur est constitué par un disque à dents (64) ayant une couronne dentée périphérique (68), à une course de rattrapage de l'usure, vu le long du sens périphérique, correspondant au moins au pas dudit disque à dents (64).

15. Actionneur d'embrayage selon la revendication 14, **caractérisé en ce qu'**on peut détecter la course d'usure rattrapée par comptage des courses de rattrapage d'usure et la mémoriser dans un mémoire de lecture dans ladite unité de commande (80).

16. Actionneur d'embrayage selon la revendication 15, **caractérisé en ce qu'**au cas de la course de travail plus longue de ladite tige poussoir (44), qui englobe ladite course de rattrapage de l'usure et ladite course d'actionnement de l'embrayage, ledit disque à dents (64) peut être tourné d'une telle manière, que la position de départ dudit élément de débrayage (22) soit déplacée pour la course de travail suivante en un sens de compensation, au moins en partie, de l'usure sur ladite boîte de vitesses (1), et qu'au cas d'une course de travail plus courte de ladite tige poussoir (44), qui n'englobe que la course d'actionnement de l'embrayage, un mouvement rotatoire dudit disque à dents (64) n'est pas s être déclenché.

17. Actionneur d'embrayage selon la revendication 16, **caractérisé en ce que** ladite boîte de vitesses (52), qui transforme un mouvement tournant dudit composant rotatif (50) en un mouvement linéaire dudit élément de débrayage (22), comprend un disque rotatif (50), sur lequel ladite tige poussoir (44) est articulée de façon excentrique, à un moyen d'engrènement (60) sous forme de tige poussoir, qui se trouve en prise dans un moyen d'engrènement (60) complémentaire sous forme de tige poussoir à un contre-disque (62) axialement déplaçable, qui, cependant, est tenu de manière à empêcher sa rotation et qui est accouplé audit élément de débrayage (22).

18. Actionneur d'embrayage selon la revendication 17, **caractérisé en ce qu'**un moyen télescopique est disposé, qui renferme un arbre (14) du moteur d'entraînement ou de la boîte de vitesses et qui consiste en une partie intérieure (56) et une partie extérieure apte à être déplacé en sens axial afin d'empêcher sa rotation, qui est constitué par ladite vis (18) of dudit mécanisme d'entraînement à écrou/vis.

19. Actionneur d'embrayage selon la revendication 18, **caractérisé en ce que** ladite vis est formée par un tube (18) et ledit disque rotatif est tenu sur un segment de ladite partie intérieure (56), qui fait saillie dudit tube (18) d'une telle façon, qu'il soit rotatoire mais stationnaire en sens axial, pendant que ledit contre-disque (62) soit tenu audit tube (18) d'une telle manière, que sa rotation soit empêchée mais qu'il soit tenu en position stationnaire en sens axial.

20. Actionneur d'embrayage selon la revendication 19, **caractérisé en ce que** ledit disque à dents (64) est accouplé à ladite partie intérieure (56) de façon à empêcher sa rotation.

21. Actionneur d'embrayage selon la revendication 20, **caractérisé en ce que** ledit disque à dents (64) est apte à être bloqué contre la rotation moyennant un moyen de verrouillage (72) qui se peut déverrouiller moyennant ladite tige poussoir (44) seulement, quand ladite tige poussoir parcourt une course de travail englobant ladite course de rattrapage de l'usure et ladite course d'actionnement de l'embrayage.

22. Actionneur d'embrayage selon la revendication 15, **caractérisé en ce que** ladite boîte de vitesses transformant un mouvement rotatoire dudit composant rotatif (50) en un mouvement linéaire dudit élément de débrayage (22) comprend un mécanisme d'entraînement à écrou/vis (82), dans lequel ledit élément de débrayage (22) constitue l'écrou et ladite vis (18) est apte à être accouplé pour un mouvement rotatoire audit composant rotatif (50), à ladite vis (18) étant stationnaire en sens axial et audit élément de débrayage (22) étant guidé afin d'empêcher sa rotation.

23. Actionneur d'embrayage selon la revendication 22, **caractérisé en ce que** ladite vis (18) et ledit écrou (22) dudit mécanisme d'entraînement à écrou/vis (82) de ladite boîte de vitesses sont constitués par ladite vis (18) et ledit écrou (22) dudit moyens de rattrapage d'usure.

24. Actionneur d'embrayage selon la revendication 23, **caractérisé en ce que** ledit composant rotatif (50) est raccordé, moyennant un moyen accoupleur (90), audit disque à dents de façon à permettre un mouvement rotatoire, ce disque étant relié à ladite vis (18) d'une manière empêchant sa rotation.

25. Actionneur d'embrayage selon la revendication 24, **caractérisé en ce que** ledit moyen accoupleur (90) est configuré d'une telle façon, qu'au cas d'une course de travail plus courte de ladite tige poussoir (44), qui n'englobe que ladite course d'actionnement de l'embrayage, ledit disque à dents (64) est accouplé à permanence audit composant rotatif (50) d'une manière à empêcher sa rotation, pendant qu'au cas de la course de travail plus longue de ladite tige poussoir (44), qui englobe ladite course de rattrapage de l'usure et ladite course d'actionnement de l'embrayage, ledit moyen accoupleur (90) permet un mouvement rotatoire relatif défini entre ledit disque à dents (64) et ledit composant rotatif (50) afin de déplacer la position de départ dudit élément de débrayage (22) pour la course de travail suivante en un sens de compensation, au moins en partie, de l'usure sur ladite boîte de vitesses (1).

26. Actionneur d'embrayage selon la revendication 25, **caractérisé en ce que** ledit moyen accoupleur (90) comprend au moins un élément accoupleur (96) guidé pour un mouvement sur ledit composant rotatif (50) et apte à se trouver en prise dans des espaces entre les dents sur ladite couronne dentée (68).

27. Actionneur d'embrayage selon la revendication 26, **caractérisé en ce que** pendant la course de travail plus longue de ladite tige poussoir (44), qui englobe ladite course de rattrapage de l'usure et ladite course d'actionnement de l'embrayage, ledit élément accoupleur (96) est apte à être commandé en portant contre un arrêt.
